# DEMANDE DE BREVET EUROPEEN

(11) **EP 0 870 937 A1**
(43) Date de publication de la demande: **14.10.1998**
(21) Numéro de dépôt: 98400813.6
(22) Date de dépôt: 06.04.1998
(51) Int. Cl.: F16B 21/02, B60Q 1/04

(54) **Fixation de feu de signalisation de véhicule automobile**

(30) Priorité: 07.04.1997 FR 9704205
(71) Demandeur: VALEO VISION, 93000 Bobigny (FR)
(72) Inventeur: Picard, Marcel, 89100 Saint-Clément (FR)
(74) Mandataire: Le Forestier, Eric

(57) **Abrégé**

Ensemble pour la fixation d'un dispositif de signalisation et/ou d'éclairage de véhicule automobile comportant un insert (10) qui est fixé sur un canon (11) que présente le socle ou boîtier dudit dispositif et qui est destiné à traverser un ajour de la tôle de la carrosserie, ainsi qu'un organe (12) monté sur l'extrémité dudit insert qui est en saillie par rapport au canon (11), ledit organe (12) étant destiné à être pivoté par rapport à l'insert (10) pour réaliser un pincement de la tôle, caractérisé en ce que ledit insert (10) est une vis montée à fond de filet dans le canon (11), l'organe (12) étant bloqué en translation axiale entre la tête de ladite vis (10) et le canon (11) et étant libre de pivoter entre deux positions autour de l'axe de la vis (10), l'une dans laquelle ledit organe (12) est apte à être passé à travers l'ajour lorsque le dispositif de signalisation et/ou d'éclairage est présenté par rapport à la carrosserie, l'autre dans laquelle ledit organe (12) assure le pincement de la tôle, lorsque la vis (10) est en place dans l'ajour de la carrosserie.

## Description

L'invention est relative à un ensemble pour la fixation de dispositifs de signalisation et/ou d'éclairage sur la carrosserie d'un véhicule automobile.

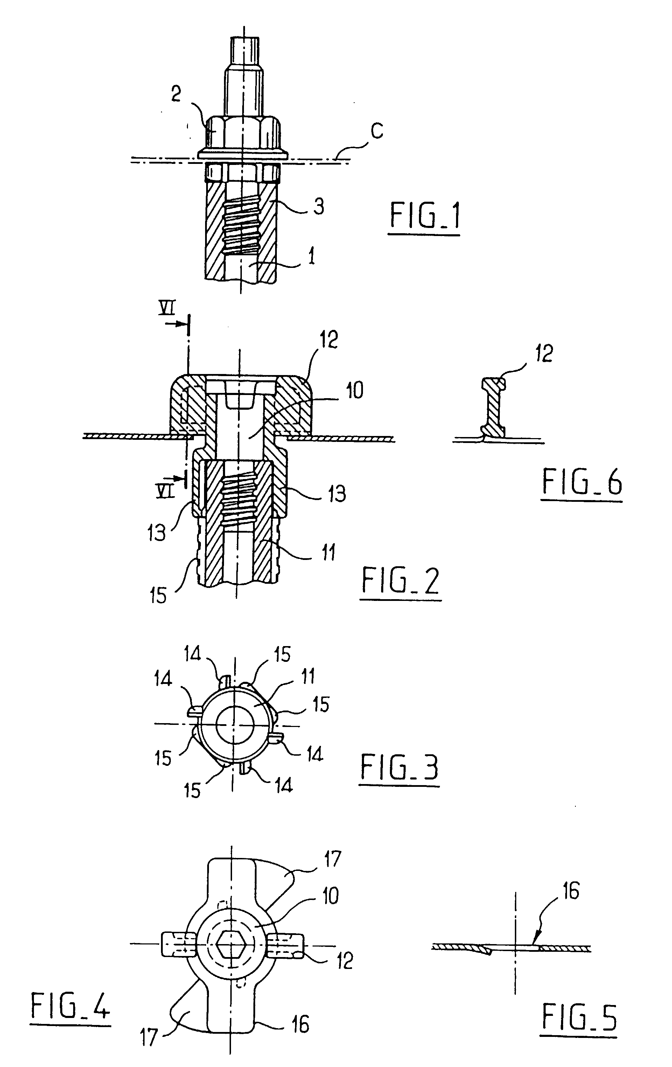

On a illustré sur la figure 1 une solution classiquement utilisée à ce jour pour la fixation du socle d'un feu de signalisation par rapport à la carrosserie d'un véhicule automobile.

Dans cette solution, le dispositif de fixation comporte un insert (goujon 1) qui est passé à travers un trou prévu à cet effet dans la carrosserie C et qui est vissé dans un canon 3 issu du socle du feu. Un écrou complémentaire 2 est vissé sur ledit insert 1 de l'autre côté de la tôle de la carrosserie de façon à immobiliser par serrage le socle du feu par rapport à la carrosserie.

Généralement, il est fourni aux constructeurs automobiles des feux de signalisation ou des projecteurs d'éclairage complets, prééquipés d'inserts (2, 3 ou 4 selon le type d'isostatisme du feu ou du projecteur, sa taille, son type d'étanchéité...).

Avec un tel dispositif de fixation, le montage s'effectue en deux phase successives.

Dans un premier temps, l'opérateur présente le feu sur la carrosserie et commence manuellement le vissage de l'écrou.

Dans un deuxième temps, il finit le vissage de l'écrou avec une visseuse pneumatique.

Toutefois, la première de ces deux opérations s'avère souvent compliquée et coûteuse en temps.

Par exemple, dans le cas d'un feu de signalisation arrière, l'opérateur tient d'une main le feu en position en étant plié et la tête dans le coffre ; de l'autre main, il doit du bout des doigts, au travers d'un ajour de carrosserie généralement pas plus grand que la dimension d'une main, présenter l'écrou en face de l'insert et amorcer le vissage.

Un but de l'invention est de proposer un dispositif de fixation qui permet de simplifier l'intervention de l'opérateur.

On notera également que les dispositifs de fixation imposent aux constructeurs de gérer des stocks d'écrous destinés à coopérer avec les inserts des dispositifs de signalisation et/ou d'éclairage qui leur sont livrés.

Un autre but de l'invention est donc de proposer un dispositif de fixation sans écrou, qui permet de livrer aux constructeurs des dispositifs de signalisation et/ou d'éclairage qui ne nécessitent aucun apport de pièce pour leur fixation.

A cet effet, l'invention propose un ensemble pour la fixation d'un dispositif de signalisation et/ou d'éclairage de véhicule automobile comportant un insert qui est fixé sur un canon que présente le socle ou boîtier dudit dispositif et qui est destiné à traverser un ajour de la tôle de la carrosserie, ainsi qu'un organe monté sur l'extrémité dudit insert qui est en saillie par rapport au canon, ledit organe étant destiné à être pivoté par rapport à l'insert pour réaliser un pincement de la tôle, caractérisé en ce que ledit insert est une vis montée à fond de filet dans le canon, l'organe étant bloqué en translation axiale entre la tête de ladite vis et le canon et étant libre de pivoter entre deux positions autour de l'axe de la vis, l'une dans laquelle ledit organe est apte à être passé à travers l'ajour lorsque le dispositif de signalisation et/ou d'éclairage est présenté par rapport à la carrosserie, l'autre dans laquelle ledit organe assure le pincement de la tôle, lorsque la vis est en place dans l'ajour de la carrosserie.

Cet ensemble de fixation présente également avantageusement les différentes caractéristiques suivantes, prises seules ou selon toutes leurs combinaisons techniquement possibles :
- l'organe est d'une pièce avec au moins une patte qui s'étend le long du canon et qui coopère avec des bossages que ledit canon présente pour bloquer ledit organe dans l'une ou l'autre de ses deux positions ;
- ladite patte coopère également avec des butées que ledit canon présente ;
- les bossages et/ou butées sont répartis sur le canon pour définir pour l'organe deux positions séparées d'un quart de tour ;
- la tôle de la carrosserie présente en bordure de l'ajour au moins un embouti ;
- l'embouti est conformé avec une rampe qui facilite la rotation de l'organe d'une de ses positions à l'autre ;
- les bords de l'organe qui sont destinés à être en contact avec la tôle de la carrosserie présentent une forme complémentaire de celle des rampes.

L'invention concerne également un dispositif de signalisation et/ou d'éclairage de véhicule automobile dont le socle ou boîtier présente un canon sur lequel est fixé un insert qui est destiné à traverser un ajour de la tôle de la carrosserie, un organe étant monté sur l'extrémité dudit insert qui est en saillie par rapport au canon, ledit organe étant destiné à être pivoté par rapport à l'insert pour réaliser un pincement de la tôle, caractérisé en ce que ledit insert est une vis montée à fond de filet dans le canon, l'organe étant bloqué en translation axiale entre la tête de ladite vis et le canon et étant libre de pivoter entre deux positions autour de l'axe de la vis, l'une dans laquelle ledit organe est apte à être passé à travers l'ajour lorsque le dispositif de signalisation et/ou d'éclairage est présenté par rapport à la carrosserie, l'autre dans laquelle ledit organe assure le pincement de la tôle, lorsque la vis est en place dans l'ajour de la carrosserie.

D'autres caractéristiques et avantages de l'invention ressortiront encore de la description qui suit. Cette description est purement illustrative et non limitative. Elle doit être lue en regard des dessins annexés sur lesquels :
- la figure 1, déjà analysée, est une représentation en coupe axiale d'une fixation conforme à un mode de réalisation connu de l'art antérieur ;
- la figure 2 est une représentation en coupe axiale d'une fixation conforme à un mode de réalisation possible de l'invention ;
- la figure 3 est une représentation en vue de dessus du canon issu du socle sur lequel l'insert de fixation est vissé ;
- la figure 4 est une représentation en vue de dessus de la fixation de la figure 2 ;
- la figure 5 est une représentation en vue en coupe d'un ajour sur la tôle de la carrosserie ;
- la figure 6 est une vue en coupe selon la ligne VI-VI de la figure 2.

L'ensemble de fixation illustré sur la figure 2 comporte un insert 10 qui est une vis montée à fond de filet dans un canon 11 issu du socle ou du boîtier d'un feu de signalisation ou d'un projecteur d'éclairage.

Cet ensemble de fixation comporte également un organe 12 - par exemple de forme oblongue (papillon) - qui est enfilé sur l'insert 10 préalablement à son vissage sur le canon 11 et qui, une fois la vis 10 en place sur le canon 11, est bloqué en translation axiale entre la tête de ladite vis 10 et ledit canon 11, mais est apte à pivoter autour de l'axe de la vis 10.

Ce papillon 12 est d'une pièce avec deux pattes 13 qui s'étendent le long du canon 11, de part et d'autre de celui-ci.

Ces pattes 13 coopèrent avec quatre butées de 14 (figure 3) qui sont réparties sur une périphérie du canon 11 et qui limitent le pivotement du papillon 12 à un débattement entre deux positions séparées d'un quart de tour. Elles coopèrent également avec quatre bossages 15 qui sont répartis entre les butées 14 à la périphérie du canon 11 pour, avec celles-ci, bloquer le papillon 12 lorsqu'il est dans l'une ou l'autre de ses deux positions séparées d'un quart de tour. Ces bossages ne s'opposent toutefois pas à la rotation du papillon par l'opérateur.

Cet ensemble de fixation est destiné à coopérer avec un ajour 16 allongé qui est défini par une ouverture circulaire prolongée par deux ouvertures de contour rectangulaire disposées de façon diamétralement opposée de part et d'autre de ladite ouverture circulaire.

Cet ajour 16 est orienté sur la carrosserie de façon que lorsque le socle de feu de signalisation (ou le boîtier dans le cas d'un projecteur) est présenté par rapport à la carrosserie, le papillon 12 puisse, dans l'une de ses deux positions, être passé à travers l'ajour 16.

Bien entendu, les feux de signalisation ou projecteurs destinés à être montés sur les véhicules sont fournis aux opérateurs de montage avec des papillons 12 immobilisés dans la position qui leur permet d'être passés à travers les ajours 16.

Lors du montage sur le véhicule, l'opérateur présente le socle ou le boîtier par rapport à la carrosserie en introduisant les papillons 12 à travers les ajours 16.

Une fois cette opération effectuée, il fait pivoter les papillons 12 d'un quart de tour de façon à les mettre dans une position où ils s'étendent perpendiculairement à l'axe des ajours 16, en étant au droit de la tôle de la carrosserie de part et d'autre de l'orifice central circulaire desdits ajours 16. La tôle de la carrosserie est alors pincée entre ledit papillon 12 et des décrochements d'extrémité des pattes 13, de sorte que le canon 11 est fixé sur la carrosserie, l'élasticité du montage étant assurée par le joint d'étanchéité du feu (non représenté).

Ainsi qu'on peut le voir plus particulièrement sur les figures 4 et 5, la tôle de la carrosserie présente en outre en bordure de l'ajour 16 des emboutis qui contribuent à assurer un serrage élastique de la tôle par la pièce que constituent le papillon 12 et les pattes 13.

Ces emboutis sont conformés avec des rampes 17 qui facilitent le passage du papillon 12 de sa première position à sa position où il est au droit de la tôle de la carrosserie.

Le glissement du papillon 12 sur ces rampes 17 est également facilité, ainsi que l'illustre la figure 5, par la courbure du bord du papillon 12 qui est en contact avec la tôle de la carrosserie, laquelle courbure définit sur ledit bord une forme complémentaire de celle des rampes.

## Revendications

1. Ensemble pour la fixation d'un dispositif de signalisation et/ou d'éclairage de véhicule automobile comportant un insert (10) qui est fixé sur un canon (11) que présente le socle ou boîtier dudit dispositif et qui est destiné à traverser un ajour (16) de la tôle de la carrosserie, ainsi qu'un organe (12) monté sur l'extrémité dudit insert qui est en saillie par rapport au canon (11), ledit organe (12) étant destiné à être pivoté par rapport à l'insert (10) pour réaliser un pincement de la tôle, caractérisé en ce que ledit insert (10) est une vis montée à fond de filet dans le canon (11), l'organe (12) étant bloqué en translation axiale entre la tête de ladite vis (10) et le canon (11) et étant libre de pivoter entre deux positions autour de l'axe de la vis (10), l'une dans laquelle ledit organe (12) est apte à être passé à travers l'ajour (16) lorsque le dispositif de signalisation et/ou d'éclairage est présenté par rapport à la carrosserie, l'autre dans laquelle ledit organe (12) assure le pincement de la tôle, lorsque la vis (10) est en place dans l'ajour (16) de la carrosserie.

2. Ensemble de fixation selon la revendication 1, caractérisé en ce que l'organe (12) est d'une pièce avec au moins une patte (13) qui s'étend le long du canon (11) et qui coopère avec des bossages (15) que ledit canon (11) présente pour bloquer ledit organe (12) dans l'une ou l'autre de ses deux positions.

3. Ensemble de fixation selon l'une des revendications 1 ou 2, caractérisé en ce que ladite patte (13) coopère également avec des butées (14) que ledit canon (11) présente.

4. Ensemble de fixation selon l'une des revendications 2 et 3, caractérisé en ce que les bossages (15) et/ou butées (14) sont répartis sur le canon pour définir pour l'organe (12) deux positions séparées d'un quart de tour.

5. Ensemble de fixation selon l'une des revendications précédentes, caractérisé en ce que la tôle de la carrosserie présente en bordure de l'ajour au moins un embouti.

6. Ensemble de fixation selon la revendication 5, caractérisé en ce que l'embouti est conformé avec une rampe (17) qui facilite la rotation de l'organe (12) d'une de ses positions à l'autre.

7. Ensemble de fixation selon la revendication 6, caractérisé en ce que les bords de l'organe (12) qui sont destinés à être en contact avec la tôle de la carrosserie présentent une forme complémentaire de celle des rampes (17).

8. Dispositif de signalisation et/ou d'éclairage de véhicule automobile dont le socle ou boîtier présente un canon (11) sur lequel est fixé un insert (10) qui est destiné à traverser un ajour (16) de la tôle de la carrosserie, un organe (12) étant monté sur l'extrémité dudit insert (10) qui est en saillie par rapport au canon (11), ledit organe (12) étant destiné à être pivoté par rapport à l'insert (10) pour réaliser un pincement de la tôle, caractérisé en ce que ledit insert (10) est une vis montée à fond de filet dans le canon (11), l'organe (12) étant bloqué en translation axiale entre la tête de ladite vis (10) et le canon (11) et étant libre de pivoter entre deux positions autour de l'axe de la vis (10), l'une dans laquelle ledit organe (12) est apte à être passé à travers l'ajour (16) lorsque le dispositif de signalisation et/ou d'éclairage est présenté par rapport à la carrosserie, l'autre dans laquelle ledit organe (12) assure le pincement de la tôle, lorsque la vis (10) est en place dans l'ajour (16) de la carrosserie.
